# FASCICULE DE BREVET EUROPEEN

(11) **EP 3 598 143 B1**
(45) Date de publication et mention de la délivrance du brevet: **27.10.2021**
(21) Numéro de dépôt: 18184189.1
(22) Date de dépôt: 18.07.2018
(51) Int. Cl.: G01P 5/02, G01F 1/28

(54) **DISPOSITIF DE MESURE DE LA VITESSE DE DÉPLACEMENT D'UN FLUIDE**
VORRICHTUNG ZUM MESSEN DER FLIESSGESCHWINDIGKEIT EINES FLUIDS
DEVICE FOR MEASURING THE SPEED OF MOVEMENT OF A FLUID

(43) Date de publication de la demande: 22.01.2020
(73) Titulaire: Carrard, Jean-Daniel, 1400 Yverdon-les-Bains (CH)
(72) Inventeur: Carrard, Jean-Daniel, 1400 Yverdon-les-Bains (CH)
(74) Mandataire: Omnis-IP

(56) Documents cités:
- EP-A1- 3 428 656
- AU-A- 5 392 298
- DE-A1- 2 752 141
- FR-A1- 2 625 567
- FR-A1- 2 862 383
- JP-A- S63 214 670
- US-A- 3 393 563

## Description

### DOMAINE TECHNIQUE

La présente invention concerne un dispositif de mesure de la vitesse de déplacement d'un fluide.

Ce dispositif de mesure peut notamment être utilisé comme anémomètre pour mesurer la vitesse du vent et éventuellement sa direction. Il peut aussi être utilisé pour mesurer des vitesses et/ou des directions de déplacement d'autres fluides.

### TECHNIQUE ANTERIEURE

Il existe actuellement de nombreux dispositifs permettant de mesurer la vitesse de déplacement d'un fluide. Parmi ceux-ci, on trouve notamment des anémomètres en charge de mesurer la vitesse du vent. De nombreux modèles différents ont été utilisés comme notamment les anémomètres à coupelle, les anémomètres à moulin et les anémomètres à traînée pour n'en citer que quelque uns.

En ce qui concerne les anémomètres à traînée, le principe général de fonctionnement est le suivant : un objet relativement léger est suspendu à un support de telle façon que cet objet ait une position de repos déterminée en l'absence de vent. En présence de vent, l'objet quitte sa position de repos pour prendre une position qui dépend de la vitesse et éventuellement de la direction du déplacement du fluide qui agit sur cet objet. La détermination de la position de l'objet permet de déterminer la vitesse de déplacement du fluide.

Dans les cas où l'objet est mobile uniquement dans un plan, l'anémomètre est souvent monté sur une girouette de façon à s'orienter dans la direction du flux de fluide.

En pratique, ce genre de dispositifs est assez peu précis. Dans le cas où le dispositif est monté sur une girouette, il est nécessaire que le fluide applique une force plus grande que les forces de frottement pour positionner la girouette de façon correcte. Il en résulte qu'il n'est pas possible de mesurer de faibles vitesses de vent.

Le déplacement de l'objet mobile suit souvent un mouvement erratique dû aux turbulences. A cause de ceci, d'une part, il est extrêmement difficile de mesurer une valeur de déplacement et d'autre part, rien ne garantit que la valeur mesurée corresponde à une valeur de vitesse de déplacement moyenne.

Il en résulte que l'anémomètre à traînée n'est pas souvent utilisé en pratique pour mesurer la vitesse de déplacement de fluides tels que par exemple la vitesse du vent et n'est pas utilisé lorsque les mesures doivent avoir un minimum de fiabilité et de précision.

La demande de brevet français FR 2 625 567 décrit un anémomètre à traînée, l'invention ayant pour objectif de minimiser les erreurs dues à des turbulences. Pour atteindre ce but, un capteur ayant la forme d'une sphère est placé à une extrémité d'une tige, ce capteur étant en contact avec le fluide dont on souhaite mesurer la vitesse de déplacement. Cet anémomètre comporte un mécanisme d'amortissement du mouvement turbulent qui fonctionne de la façon suivante. La tige du capteur est reliée à un fil souple qui est lui-même relié au fond d'un boîtier. Ce fil souple comporte un disque métallique en son milieu, ce disque étant perpendiculaire à l'axe longitudinal du fil souple. Le boîtier comporte au moins deux aimants entre lesquels le disque métallique peut se déplacer. La combinaison du disque métallique et des aimants joue le rôle de frein à courant de Foucault. Ce frein à courant de Foucault permet de stabiliser le mouvement du capteur et donc de faciliter la mesure de la vitesse et la lecture de cette mesure.

Ce dispositif présente un certain nombre d'inconvénients. Le fait que le fil souple relie le capteur au fond du boîtier implique que ce fil doit pouvoir coulisser par rapport au fond de ce boîtier ou par rapport au capteur. Il en résulte des frottements qui sont incompatibles avec des mesures précises à basse vitesse.

Le déplacement du disque métallique entre les aimants nécessite une force qui fausse également les mesures. Par ailleurs, pour que les mesures puissent être utilisées, il est nécessaire que le disque reste parallèle aux aimants, sans contact avec ces derniers. Ceci est particulièrement difficile à réaliser en pratique.

Selon le principe même de fonctionnement de ce dispositif, une déviation relativement importante de la position du capteur engendre un déplacement relativement faible du disque métallique puisque le principe de l'invention revient à mesurer la flèche du fil souple. La conversion du déplacement du disque métallique en une mesure de la vitesse du fluide est donc peu précise.

Dans les anémomètres à traînée existants, il est important que le capteur ou l'élément de traînée soit dans une position verticale en l'absence de flux de fluide. En effet, le capteur étant soumis à l'attraction terrestre, la position de repos du capteur est une position verticale et la détermination de la vitesse du fluide est dépendante de la déviation de l'élément de traînée par rapport à cette position verticale. Ceci empêche d'utiliser de tels anémomètres à traînée dans des endroits dans lesquels l'ensemble du dispositif peut pivoter par rapport à un axe vertical. Ceci peut être le cas lorsque le dispositif est monté sur un objet mobile tel qu'un bateau par exemple ou un objet soumis à des chocs ou des déplacements relativement brusques. De tels anémomètres ne peuvent pas non plus être utilisés dans certaines configurations dans lesquelles par exemple le fluide se déplace dans une direction verticale ou simplement lorsque la configuration du système ne permet pas de placer le capteur de l'anémomètre dans une telle position.

La demande de brevet australien AU 5392298 décrit un dispositif de mesure de la vitesse de déplacement d'un fluide. Ce dispositif comporte une palette pivotant autour d'un axe de rotation, la palette se terminant par un aimant. Le dispositif comporte en outre deux aimants agencés pour ramener l'aimant de la palette en position de repos dans en cas d'absence de déplacement du fluide.

Ce dispositif est placé dans un conduit et est en mesure de déterminer la vitesse de déplacement du fluide dans une seule direction. Par ailleurs, il est destiné à mesurer un flux laminaire uniquement.

US3393563 décrit un débitmètre comprenant une tige pivotant autour d'une position de repos en fonction de la vitesse du fluide dans un conduit et un système d'aimants qui repousse la tige vers sa position de repos.

### EXPOSE DE L'INVENTION

La présente invention se propose de résoudre les problèmes des dispositifs mentionnés ci-dessus, en réalisant un dispositif de mesure de la vitesse de déplacement d'un fluide qui soit réellement utilisable dans la pratique, fiable et précis sur une grande plage de valeurs de mesure. De plus, ce dispositif peut être placé dans n'importe quelle position, tout en permettant une mesure fiable et précise.

Le but de l'invention est atteint par un dispositif de mesure de la vitesse de déplacement d'un fluide selon la revendication 1, ce dispositif comportant un boîtier et un équipage mobile partiellement disposé à l'intérieur du boîtier et partiellement disposé à l'extérieur du boîtier, cet équipage mobile comportant une tige mobile, cette tige mobile comportant une tige de trainée disposée au moins partiellement à l'extérieur du boîtier et une tige de stabilisation disposée au moins partiellement à l'intérieur du boîtier, la tige de trainée et la tige de stabilisation étant alignées l'une avec l'autre et solidaires l'une de l'autre, ce dispositif de mesure comportant des moyens de détermination d'une déviation de la position de l'équipage mobile par rapport à une position de repos de cet équipage mobile, cette position de repos étant la position de l'équipage mobile en l'absence de flux du fluide, ce dispositif de mesure étant caractérisé en ce que l'équipage mobile comporte un aimant de stabilisation, en ce que le boîtier contient au moins un aimant de répulsion disposé de façon à repousser l'aimant de stabilisation de l'équipage mobile vers ladite position de repos et en ce que l'équipage mobile se déplace dans un cône de révolution ayant pour sommet le centre de gravité de cet équipage mobile.

L'équipage mobile tel qu'utilisé dans le dispositif de l'invention est pivotant autour de son centre de gravité. Cela signifie qu'une très faible force appliquée sur le capteur assure un déplacement de ce capteur. Les frottements à vaincre sont minimes ce qui permet de mesurer des vitesses de fluide très faibles. Cet équipage mobile a toutefois une position de repos définie dans laquelle il est ramené en l'absence de flux de fluide. La position de repos de l'équipage mobile est la position de l'équipage mobile lorsque la vitesse de déplacement du fluide est nulle. Cette position de repos n'est pas nécessairement verticale, contrairement aux anémomètres à traînée de l'art antérieur.

L'équipage mobile peut se déplacer non pas uniquement dans un plan, mais dans un cône de révolution, ce qui permet également la mesure de la direction de déplacement du fluide. Il n'est donc pas nécessaire de vaincre d'abord une force de frottement avant que le dispositif puisse être utilisé, comme dans le cas d'un anémomètre monté sur une girouette. Il n'y a pas d'effet d'hystérésis. Cette caractéristique permet de mesurer des vitesses de déplacement très faibles et ceci, dans n'importe quelle direction.

Contrairement aux anémomètres connus, la force de gravité qui s'applique sur le capteur est compensée de telle façon qu'on peut considérer que ce capteur n'est pas soumis à la gravité. De cette manière, il est possible de s'affranchir de l'obligation de positionner l'équipage mobile selon un axe vertical et le dispositif peut être utilisé dans n'importe quelle position.

Si le fluide se déplace dans un plan sensiblement perpendiculaire à l'axe longitudinal de l'équipage mobile lorsque ce dernier est en position de repos, le déplacement de l'équipage mobile par rapport à sa position de repos pour une vitesse de déplacement du fluide donnée est le même, quelle que soit la direction de déplacement de ce fluide. Ceci permet une bonne fiabilité et une bonne reproductibilité des mesures.

Le dispositif comporte des moyens de stabilisation du déplacement de l'équipage mobile. Ces moyens de stabilisation ont pour effet d'éviter que cet équipage mobile suive un mouvement erratique. Ceci permet une lecture facilitée de la position de l'équipage mobile et donc une mesure plus précise, plus fiable et plus reproductible. Il est à noter que ces moyens de stabilisation n'introduisent pas du tout de frottements à vaincre au démarrage.

Le dispositif selon l'invention répond à deux contraintes contradictoires qui sont d'une part l'absence de forces de type frottements à vaincre avant de pouvoir effectuer une mesure et d'autre part, l'application de forces de stabilisation du mouvement de l'équipage mobile, sans pour autant fausser les mesures.

Ces différentes caractéristiques permettent de mesurer des vitesses de déplacement de fluide sur une grande plage de valeurs, de moins d'un centimètre par seconde à plusieurs dizaines de kilomètres par heure, tout en conservant une bonne précision sur toute la plage de mesure.

Le dispositif de l'invention peut être équipé de moyens pour transmettre les mesures à distance à un utilisateur. Dans ce cas, le dispositif consomme peu d'énergie et peut donc être alimenté par une source d'énergie provenant de l'environnement. Typiquement, si le dispositif est utilisé en extérieur comme anémomètre, il peut être alimenté en énergie par une cellule photovoltaïque.

L'équipage mobile du dispositif de l'invention peut être fixé en son centre de gravité. Il n'est alors pas influencé par les chocs et les vibrations et n'est pas sensible aux perturbations qui s'appliquent à l'ensemble de l'équipage mobile. Il reste toutefois influencé par les forces qui s'appliquent uniquement sur le capteur, ces forces étant provoquées par le déplacement du fluide. L'invention permet ainsi de discriminer les forces que l'on cherche à mesurer et qui sont générées par le fluide dont on souhaite mesurer la vitesse de déplacement et les forces dues à des mouvements brusques du support tels que des chocs et autres perturbations, que l'on cherche à éliminer. Le dispositif de l'invention peut donc être placé dans un environnement dans lequel il risque de subir des chocs, tout en y résistant et tout en restant en mesure de fournir des résultats fiables. Il est clair qu'un tel dispositif n'est pas prévu pour résister à des chocs de grande amplitude. Par contre, il est capable de résister à des mouvements qui peuvent être relativement brusques, comme par exemple ceux qui peuvent se produire lorsque le dispositif est tenu à la main ou qu'il est placé sur un support mobile comme notamment une grue ou un mât de bateau.

Selon la configuration du système dans lequel on cherche à mesurer la vitesse d'un flux de fluide, il est possible que ce flux de fluide ait une composante qui ne se trouve pas dans un plan perpendiculaire à l'axe longitudinal de l'équipage mobile en position de repos. Ceci pourrait arriver par exemple si le dispositif de mesure est placé de telle façon que la position de repos de l'équipage mobile soit verticale et que le flux de fluide ait une composante de déplacement verticale. Dans un tel cas, seules les composantes du flux de fluide dans un plan perpendiculaire à l'axe longitudinal de l'équipage mobile seraient mesurées. Afin de mesurer les composantes dans toutes les directions, il est possible de placer deux dispositifs de mesure à proximité l'un de l'autre, les axes longitudinaux de l'équipage mobile de ces dispositifs n'étant pas colinéaires. Selon une variante préférée, ces axes pourraient être perpendiculaires entre eux. L'un des axes pourrait par exemple être vertical et l'autre horizontal.

Ceci est possible grâce au fait que la position de repos de l'équipage mobile n'est pas nécessairement verticale comme dans les dispositifs équivalents de l'art antérieur.

Dans une telle configuration, les deux dispositifs de mesure peuvent partager une partie commune, comme par exemple la partie électronique permettant le traitement et/ou la transmission de mesures.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 est une vue schématique de profil d'un mode de réalisation du dispositif de l'invention dans une première position ;
- la figure 2 est une vue de dessus d'une partie du dispositif de la figure 1 ;
- la figure 3 est une vue de dessus d'un élément du dispositif de l'invention ; et
- la figure 4 est une vue similaire à la figure 1, dans une deuxième position.

### MANIERES DE REALISER L'INVENTION

En référence aux figures, le dispositif 10 de l'invention est destiné à mesurer notamment la vitesse de déplacement d'un fluide. Ce dispositif peut également être utilisé pour mesurer la direction du déplacement du fluide. Le fluide peut être de l'air et le dispositif peut donc être utilisé comme anémomètre. Ce fluide peut également être un gaz ou un mélange de gaz différent de l'air ou un liquide.

Ce dispositif comprend notamment un équipage mobile 11 maintenu par un boîtier 12 et un détecteur 13 agencé pour déterminer la position de cet équipage mobile 11. Il comprend en outre des moyens de stabilisation 14 du mouvement de l'équipage mobile 11.

L'équipage mobile 11 est formé d'une tige mobile 15 disposée partiellement à l'intérieur du boîtier 12 et partiellement à l'extérieur du boîtier. Plus précisément, la tige mobile 15 est formée d'une tige de traînée 16 disposée à l'extérieur du boîtier et donc en contact avec ledit fluide en mouvement, et d'une tige de stabilisation 17 disposée à l'intérieur du boîtier et donc protégée du fluide en mouvement. La tige de traînée 16 et la tige de stabilisation 17 sont en principe alignées l'une avec l'autre et solidaires l'une de l'autre. Dans le mode de réalisation illustré, la tige de traînée 16 et la tige de stabilisation 17 sont liées entre elles par un élément de liaison 18 ayant une forme sensiblement sphérique.

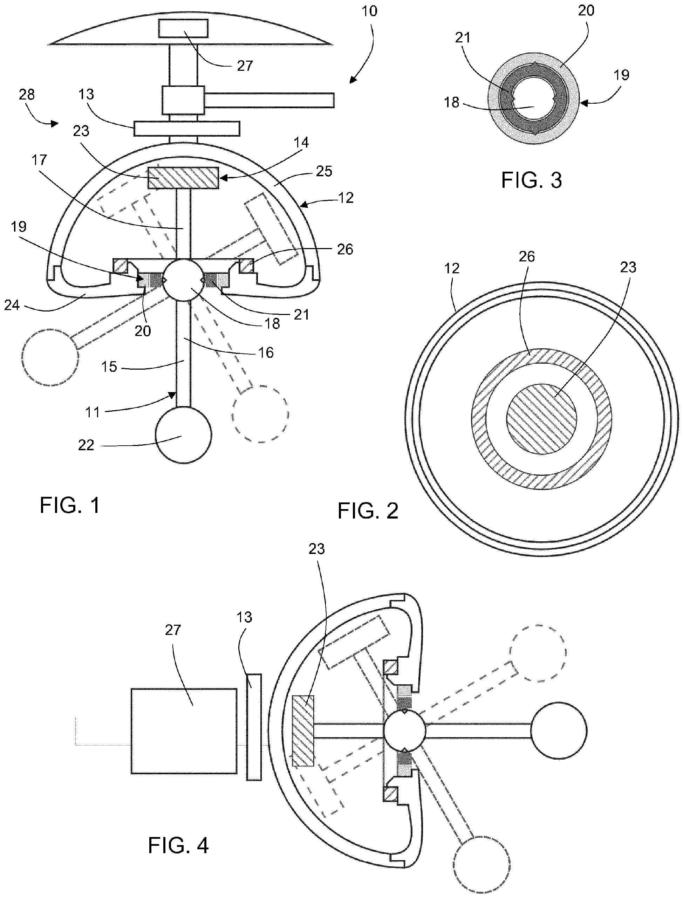

La tige mobile 15 peut se déplacer dans un cône de révolution ayant pour sommet, le centre de gravité de l'équipage mobile 11. La tige mobile 15, et plus précisément l'élément de liaison 18 est montée sur un cardan 19 comportant, dans le mode de réalisation illustré en particulier par la figure 3, deux anneaux 20, 21 pivotant chacun sur un axe comportant très peu de frottement.

La tige de traînée 16 est munie d'un capteur 22 à son extrémité. Dans le mode de réalisation illustré, le capteur 22 a une forme sphérique. Il pourrait toutefois avoir une forme différente et/ou être formé de la tige de traînée 16 elle-même. Ce capteur est exposé au fluide et présente une surface suffisamment importante pour que le déplacement du fluide assure un déplacement de la tige mobile.

La tige de stabilisation 17 comporte un aimant de stabilisation 23 disposé à l'extrémité opposée au capteur.

Les masses, les dimensions et les positions du capteur 22, de l'aimant de stabilisation 23 et des tiges de traînée 16 et de stabilisation 17 sont telles que l'équipage mobile est équilibré autour de son point de fixation au cardan 19. Cela a pour effet qu'une force très faible est nécessaire pour déplacer l'équipage mobile 11 dans n'importe quelle direction.

Le boîtier 12 comporte un fond 24 pourvu d'une ouverture inférieure par laquelle débouche la tige de traînée 16, et un dôme 25 à l'intérieur duquel se déplace la tige de stabilisation 17 à l'abri du flux de fluide.

Le dispositif de mesure 10 selon l'invention comporte des moyens 28 pour déterminer la position de l'équipage mobile 11. Plus précisément, ces moyens 28 sont agencés pour déterminer au moins l'amplitude du déplacement de l'équipage mobile 11 par rapport à sa position de repos. Ils peuvent en outre permettre de déterminer non seulement l'amplitude du déplacement, mais encore la position absolue, ce qui permet de déterminer non seulement la vitesse du flux de fluide, mais également sa direction.

Selon un mode de réalisation avantageux, ces moyens de détermination 28 de la position de l'équipage mobile sont formés notamment par le détecteur 13 utilisant l'aimant 23 de stabilisation disposé à l'extrémité de la tige de stabilisation 17. Ce détecteur 13 fonctionne comme un capteur à effet Hall. Ce détecteur 13 permet de déterminer la position de l'aimant de stabilisation 23 et donc l'angle de la tige mobile 15 par rapport à une position de repos ainsi que sa direction par rapport à une référence. Ces éléments seront utilisés pour déterminer la vitesse de déplacement du fluide ainsi que sa direction.

Le boîtier 12 du dispositif de mesure 10 selon l'invention reçoit en outre au moins un aimant de répulsion 26 disposé de façon concentrique par rapport à la tige mobile 15.

Dans le mode de réalisation illustré, l'aimant de répulsion 26 a une forme annulaire. Cet aimant de répulsion 26 coopère avec l'aimant de stabilisation 23 de la tige de stabilisation 17 pour ramener la tige mobile 15 dans sa position de repos.

De façon plus détaillée, la disposition des pôles de l'aimant de stabilisation 23 et de l'aimant de répulsion 26 est telle que l'aimant de répulsion 26 repousse l'aimant de stabilisation 23. En l'absence de force appliquée sur la tige mobile 15 et plus particulièrement sur la tige de traînée 16, les forces de répulsion exercées par l'aimant de répulsion 26 sont symétriques selon l'axe de symétrie de cet aimant de répulsion annulaire. La tige mobile 15 est donc alignée avec cet axe de symétrie. Comme le point de pivotement de la tige mobile 15 est confondu avec son centre de gravité, cette tige mobile est en équilibre et alignée avec l'axe de l'aimant de répulsion 26 annulaire quelle que soit la position du boîtier.

En lieu et place d'un aimant de répulsion annulaire, il est possible de prévoir plusieurs aimants disposés sur un cercle concentrique au centre de gravité de l'équipage mobile. L'utilisation d'un ou plusieurs aimants de répulsion agissant sur l'aimant de stabilisation 23, ainsi que le fait de fixer l'équipage mobile 11 au niveau de son centre de gravité assurent que cet équipage mobile s'affranchisse de la force de gravité terrestre. En l'absence d'un flux de fluide, la position de repos de l'équipage mobile peut donc être n'importe quelle position, l'axe longitudinal de l'équipage mobile étant perpendiculaire au plan dans lequel le ou les aimants de répulsion sont disposés.

Il est à noter que la force du champ magnétique qui ramène l'équipage mobile 11 dans sa position de repos, ou force de répulsion, dépend d'une fonction de la distance, à la puissance 3. Cela signifie que si l'équipage mobile 11 s'approche de l'aimant de répulsion 26, la force de répulsion devient très grande. Il est donc possible de mesurer des vitesses de déplacements très grandes du fluide sans arriver à une butée mécanique.

Contrairement aux anémomètres à traînée connus, la vitesse du fluide n'est pas déterminée à partir de la déviation de l'élément de traînée par rapport à un axe vertical, mais par rapport à un axe de symétrie d'un ou plusieurs aimants de répulsion qui peuvent être placés dans n'importe quelle position. De ce fait, il est possible de mesurer une vitesse dans n'importe quelle position du dispositif.

Comme mentionné précédemment, le dispositif de l'invention comporte des moyens de stabilisation 14 du mouvement de l'équipage mobile. Ces moyens de stabilisation sont prévus pour éviter qu'un déplacement turbulent du fluide ne génère un déplacement erratique de l'équipage mobile 11, ce qui rendrait compliqué, voire impossible, une mesure fiable de la vitesse de déplacement du flux.

Ces moyens de stabilisation 14 sont prévus pour amortir les déplacements de l'équipage mobile sans introduire de frottement engendrant des erreurs de mesure. Les moyens de stabilisation comportent un aimant qui peut avantageusement, mais pas obligatoirement, être le même que l'aimant de stabilisation 23 qui est utilisé pour déterminer la position de l'équipage mobile. Ces moyens de stabilisation incluent également le dôme 25 du boîtier. Ce dôme est réalisé en un matériau conducteur électrique tel que du cuivre ou de l'aluminium notamment. Ce dôme s'étend sur une surface qui couvre de préférence toutes les positions possibles de l'équipage mobile ou du moins une grande partie d'entre elles. Dans le mode de réalisation illustré, le dôme forme une demi-sphère ou une calotte sphérique centrée sur le centre de gravité ou le point de pivotement de l'équipage mobile.

De cette manière, la distance entre l'aimant de stabilisation 23 et la surface intérieure du dôme 25 reste sensiblement constante quelle que soit la position de l'équipage mobile 11. Il est toutefois également possible de réaliser un dôme de telle manière que la distance entre l'aimant et la surface intérieure du dôme ne soit pas constante. Dans ce cas, la distance entre l'aimant et cette surface intérieure sera généralement toutefois constante sur un cercle centré sur le centre du dôme.

L'intérêt d'utiliser un aimant de stabilisation placé à l'extrémité de la tige d'équilibrage et à proximité du dôme, combiné avec le fait que ce dôme est réalisé en une matière conductrice électrique vient du fait que cet ensemble forme un frein à courant de Foucault. Dans ce type de freins, le déplacement de l'élément mobile est d'autant plus contrecarré par le frein que la distance entre l'aimant et la partie conductrice est faible et que le mouvement est rapide. Il en résulte que si le mouvement est très lent, le frein n'aura pratiquement aucun effet. Si au contraire, le mouvement est rapide, le frein aura un effet important.

Dans le cas du dispositif de l'invention, si l'écoulement du fluide est laminaire, l'équipage mobile 11 subira une déviation par rapport à sa position de repos et restera sensiblement immobile dans la position atteinte. Le frein à courant de Foucault n'aura aucun effet et la détermination de la déviation de la position de l'équipage mobile par rapport à la position de repos sera relativement simple. Dans le cas où le fluide subit un écoulement turbulent, le frein à courant de Foucault agira d'autant plus efficacement que les turbulences sont importantes. Ceci aura pour effet de stabiliser le déplacement de l'équipage mobile et de rendre possible la détermination de sa position.

De cette façon, les moyens de stabilisation 14 du mouvement n'interfèrent pas avec la mesure absolue de la vitesse de déplacement du fluide, mais agissent uniquement pour diminuer le caractère erratique des déplacements de l'équipage mobile. Le dispositif de l'invention peut donc être utilisé dans des conditions dans lesquelles la vitesse du fluide est très faible et sur une plage de vitesses très grandes, aussi bien avec des fluides ayant un écoulement laminaire que dans des conditions d'écoulement turbulent.

Le dispositif de l'invention peut en outre comporter un circuit électronique 27 de traitement des informations reçues par le détecteur 13. Ce circuit électronique est avantageusement associé à une mémoire et à des moyens de communication (non représentés). Le circuit électronique 27 reçoit de la part du détecteur 13, des informations de la position de l'aimant de stabilisation 23.

L'information de position peut prendre plusieurs formes. Selon une première forme, cette information indique simplement une distance, par exemple entre l'aimant de stabilisation 23 et le détecteur 13. Cette seule information ne permet pas de discriminer une position précise de l'aimant de stabilisation sur un cercle perpendiculaire à l'axe longitudinal de l'équipage mobile en position de repos. Dans ce cas, l'information de position permet de déterminer la vitesse du flux de fluide, mais pas sa direction.

Selon une deuxième forme, l'information de position donne une position absolue qui permet de connaître la distance de l'aimant de stabilisation 23 par rapport au détecteur 13, ainsi que la déviation angulaire par rapport à un plan de référence passant par l'axe longitudinal de l'équipage mobile en position de repos. Dans ce cas, l'information de position permet non seulement de déterminer la vitesse du flux de fluide, mais également sa direction.

Cette information de position est traitée dans le circuit électronique 27 de traitement pour en déduire l'amplitude du déplacement de l'équipage mobile par rapport à la position de repos. Cette amplitude est à son tour utilisée pour en déduire la vitesse du fluide, sur la base du fait que l'amplitude du déplacement de l'équipage mobile par rapport à sa position de repos est proportionnelle à la vitesse de déplacement du fluide. Si cette information est souhaitée et/ou disponible, la direction de déplacement du fluide peut également être déterminée à partir de la position de l'aimant, déterminée par le détecteur 13.

Il est à noter que la relation entre l'amplitude du déplacement de l'équipage mobile et la vitesse du fluide dépend notamment de la sensibilité du dispositif et donc de différents paramètres tels que la taille, la puissance et la position des aimants, la forme de la tige de traînée, etc. Un calibrage peut être utilisé pour déterminer cette relation entre déplacement et vitesse. La relation entre le déplacement et la vitesse peut égalent dépendre d'autres paramètres tels qu'en particulier la pression. Pour tenir compte de ceci, un capteur de pression (non représenté) peut être intégré au dispositif de l'invention. Ce capteur de pression peut être connecté au circuit électronique 27 de façon à permettre à ce dernier de tenir compte des données relatives à la pression lors du calcul de la vitesse du fluide.

Selon un mode de réalisation avantageux, il est possible de calibrer le dispositif de mesure après son installation. Ceci peut être fait en protégeant le capteur et la tige de traînée du flux de fluide. La position de l'équipage mobile atteinte dans ces conditions correspond à la position de repos de cet équipage mobile.

Il est également possible de recalibrer de façon dynamique, le dispositif de mesure. On peut supposer que l'absence de mouvement du capteur 22 pendant une durée déterminée, par exemple 3 minutes, indique une absence de flux de fluide. Si le capteur est immobile pendant cette durée déterminée, il est possible d'indiquer que la position atteinte par l'équipage mobile et détectée par le détecteur correspond à la position de repos. Un tel recalibrage dynamique permet de corriger d'éventuelles dérives des mesures.

Selon l'implémentation souhaitée, différents modes de réalisation sont envisageables en ce qui concerne l'utilisation des données mesurées par le dispositif. Le résultat des mesures peut par exemple être envoyé à intervalles réguliers par l'intermédiaire des moyens de communication, à un centre tel qu'un centre météorologique. Les résultats peuvent également être mémorisés localement dans la mémoire du dispositif de l'invention. Ces mesures peuvent être envoyées en bloc, au centre, en utilisant les moyens de communication. Ces moyens de communication pourraient typiquement utiliser un protocole de communication tel que celui connu sous le nom LoRa qui a l'avantage de ne consommer que peu d'énergie.

Il est également possible que le dispositif de l'invention ne comprenne pas de moyens de traitement. Dans ce cas, la position de l'équipage mobile telle que mesurée par le détecteur est transmise à un centre. Cette information est ensuite traitée dans le centre pour en extraire les informations souhaitées concernant la vitesse et éventuellement la direction de déplacement du fluide.

Les moyens pour déterminer le déplacement de l'équipage mobile ont été décrits comme comprenant un capteur à effet Hall utilisant l'aimant de stabilisation disposé à une extrémité de l'équipage mobile. D'autres moyens pourraient être utilisés pour déterminer la position de l'équipage mobile. Ces moyens pourraient par exemple utiliser un élément optique externe ou interne à l'une des tiges, une caméra ou tout autre moyen approprié.

Un avantage du fait que l'équipage mobile soit à l'équilibre autour de son centre de gravité est le fait que des vibrations ou des chocs agissent de façon identique sur la tige d'équilibrage et sur la tige de traînée de cet équipage mobile. Il en résulte que cet équipage mobile est insensible aux chocs et aux vibrations et que le dispositif peut donc être placé et utilisé dans un endroit dans lequel il peut être soumis à ce type de perturbations.

Le seul élément qui agit uniquement sur la tige de traînée 16 et non sur la tige de stabilisation 17 est le flux de fluide dont on cherche à mesurer la vitesse de déplacement.

Selon une variante, il est possible de combiner plusieurs dispositifs de mesure, par exemple deux, en les plaçant de telle manière que la position de repos de leur équipage mobile respectif forme un angle de 90°. Ceci permet de mesurer différentes composantes du flux de fluide et de déterminer la direction et la vitesse en trois dimensions.

## Revendications

1. Dispositif de mesure (10) de la vitesse de déplacement d'un fluide, ce dispositif (10) comportant un boîtier (12) et un équipage mobile (11) partiellement disposé à l'intérieur du boîtier (12) et partiellement disposé à l'extérieur du boîtier, cet équipage mobile (11) comportant une tige mobile (15), cette tige mobile (15) comportant une tige de trainée (16) disposée à l'extérieur du boîtier (12) et une tige de stabilisation (17) disposée à l'intérieur du boîtier (12), la tige de trainée (16) et la tige de stabilisation (17) étant alignées l'une avec l'autre et solidaires l'une de l'autre, ce dispositif de mesure (10) comportant des moyens de détermination d'une déviation de la position de l'équipage mobile (11) par rapport à une position de repos de cet équipage mobile, cette position de repos étant la position de l'équipage mobile en l'absence de flux du fluide, ce dispositif de mesure étant **caractérisé en ce que** l'équipage mobile (11) comporte un aimant de stabilisation (23), **en ce que** le boîtier (12) contient au moins un aimant de répulsion (26) disposé de façon à repousser l'aimant de stabilisation (23) de l'équipage mobile vers ladite position de repos et **en ce que** l'équipage mobile se déplace dans un cône de révolution ayant pour sommet le centre de gravité de cet équipage mobile (11).

2. Dispositif de mesure selon la revendication 1, **caractérisé en ce que** ladite tige mobile (15) est montée sur un cardan (19) liés audit boîtier (12).

3. Dispositif de mesure selon la revendication 1, **caractérisé en ce que** l'équipage mobile (11) pivote autour d'un point de pivotement et **en ce que** ledit au moins un aimant de répulsion (26) comporte une pluralité d'aimant disposés dans le boîtier (12), sur un cercle concentrique au point de pivotement de l'équipage mobile (11).

4. Dispositif de mesure selon la revendication 1, **caractérisé en ce que** l'équipage mobile (11) pivote autour d'un point de pivotement ledit au moins un aimant de répulsion (26) est formé d'un aimant annulaire disposés dans le boîtier (12), sur un cercle concentrique au point de pivotement de l'équipage mobile.

5. Dispositif de mesure selon la revendication 1, **caractérisé en ce que** le boîtier comporte un dôme (25) réalisé en une matière conductrice d'électricité.

6. Dispositif de mesure selon les revendications 4 et 5, **caractérisé en ce que** le dôme (25) a une forme de calotte sphérique, la sphère dont est issue ladite calotte sphérique étant centrée sur le point de pivotement de l'équipage mobile (11).

7. Dispositif de mesure selon la revendication 1, **caractérisé en ce que** les moyens de détermination d'une déviation de la position de l'équipage mobile par rapport à une position de repos de cet équipage mobile comportent un détecteur (13) agencé pour déterminer la position de l'aimant de stabilisation (23).

8. Dispositif de mesure selon la revendication 7, **caractérisé en ce qu'**il comporte un circuit électronique (27) de traitement agencé pour convertir la position de l'aimant de stabilisation (23) déterminée par le détecteur (13) en une vitesse du fluide.

9. Dispositif de mesure selon la revendication 8, **caractérisé en ce que** le circuit électronique (27) de traitement est en outre agencé pour convertir la position de l'aimant de stabilisation (23) déterminée par le détecteur (13) en une direction de déplacement du fluide.

10. Dispositif de mesure selon la revendication 1, **caractérisé en ce qu'**il comporte des moyens de communication agencés pour transmettre des mesures dudit détecteur (13) à un centre de traitement.

## Patentansprüche

1. Messvorrichtung (10) zum Messen der Verschiebungsgeschwindigkeit einer Flüssigkeit, wobei diese Vorrichtung (10) ein Gehäuse (12) und ein bewegliches Teil (11) umfasst, das teilweise innerhalb des Gehäuses (12) und teilweise außerhalb des Gehäuses angeordnet ist, wobei dieser bewegliche Teil (11) eine bewegliche Stange (15) umfasst, wobei diese bewegliche Stange (15) eine außerhalb des Gehäuses (12) angeordnete Schleppstange (16) und eine innerhalb des Gehäuses angeordnete Stabilisierungsstange (17) umfasst, wobei die Schleppstange (16) und die Stabilisierungsstange (17) miteinander fluchten und miteinander verbunden sind, wobei diese Messvorrichtung (10) Mittel zum Bestimmen einer Abweichung der Position des beweglichen Teils (11) im Vergleich zu einer Ruheposition dieses beweglichen Teils umfasst, wobei diese Ruheposition die Position des beweglichen Teils ohne Flüssigkeitsströmung ist, wobei diese Messvorrichtung **dadurch gekennzeichnet ist, dass** das bewegliche Teil (11) einen Stabilisierungsmagneten (23) umfasst, dass das Gehäuse (12) mindestens einen Abstoßungsmagneten (26) enthält, der so angeordnet ist, dass er den Stabilisierungsmagneten (23) des beweglichen Teils in Richtung der Ruheposition schiebt und dadurch, dass sich der bewegliche Teil in einem Rotationskegel verschiebt, dessen Spitze der Schwerpunkt dieses beweglichen Teils (11) ist.

2. Messvorrichtung nach Anspruch 1, **dadurch gekennzeichnet, dass** die bewegliche Stange (15) an einem mit dem Gehäuse (12) verbundenen Kardangelenk (19) montiert ist.

3. Messvorrichtung nach Anspruch 1, **dadurch gekennzeichnet, dass** das bewegliche Teil (11) um einen Drehpunkt schwenkt und dass der mindestens eine Abstoßungsmagnet (26) mehrere im Gehäuse (12) angeordnete Magnete umfasst, auf einem Kreis, der konzentrisch zum Drehpunkt des beweglichen Teils (11) ist.

4. Messvorrichtung nach Anspruch 1, **dadurch gekennzeichnet, dass** der bewegliche Teil (11) um einen Drehpunkt schwenkt, wobei der mindestens eine Abstoßungsmagnet (26) aus einem ringförmigen Magneten besteht, der in dem Gehäuse (12) auf einem Kreis angeordnet ist, der mit dem Drehpunkt des beweglichen Teils konzentrisch ist.

5. Messvorrichtung nach Anspruch 1, **dadurch gekennzeichnet, dass** das Gehäuse eine Kuppel (25) aus einem elektrisch leitfähigem Material umfasst.

6. Messvorrichtung nach den Ansprüchen 4 und 5, **dadurch gekennzeichnet, dass** die Kuppel (25) die Form einer Kugelkalotte hat, wobei die Kugel, von der die Kugelkalotte ausgeht, auf den Drehpunkt des beweglichen Teils (11) zentriert ist.

7. Messvorrichtung nach Anspruch 1, **dadurch gekennzeichnet, dass** die Mittel zum Bestimmen einer Abweichung der Position des beweglichen Teils gegenüber einer Ruheposition dieses beweglichen Teils einen Detektor (13) umfassen, der angeordnet ist, um die Position des Stabilisierungsmagneten (23) zu bestimmen.

8. Messvorrichtung nach Anspruch 7, **dadurch gekennzeichnet, dass** sie eine elektronische Verarbeitungsschaltung (27) umfasst, die eingerichtet ist, um die von dem Detektor (13) bestimmte Position des Stabilisierungsmagneten (23) in eine Geschwindigkeit der Flüssigkeit umzuwandeln.

9. Messvorrichtung nach Anspruch 8, **dadurch gekennzeichnet, dass** die elektronische Verarbeitungsschaltung (27) ferner dazu eingerichtet ist, um die von dem Detektor (13) bestimmte Position des Stabilisierungsmagneten (23) in eine Verschiebungsrichtung der Flüssigkeit umzuwandeln.

10. Messvorrichtung nach Anspruch 1, **dadurch gekennzeichnet, dass** sie Kommunikationsmittel umfasst, die eingerichtet sind, um Messungen von dem Detektor (13) an ein Verarbeitungszentrum zu übertragen.

## Claims

1. Fluid movement speed measuring device (10), this device (10) including a case (12) and a moving part (11) partially arranged inside the case (12) and partially arranged outside the case, this moving part (11) including a moving rod (15), this moving rod (15) including a drag rod (16) arranged outside the case (12) and a stabilization rod (17) arranged inside the case (12), the drag rod (16) and the stabilization rod (17) being aligned with each other and integral with each other, this measuring device (10) including means for determining a deviation of the position of the moving part (11) compared to a rest position of this moving part, this rest position being the position of the moving part in the absence of flow of the fluid, this measuring device being **characterized in that** the moving part (11) comprises a stabilization magnet (23), **in that** the case (12) contains at least one repulsion magnet (26) arranged so as to push the stabilization magnet (23) of the moving part towards said rest position and **in that** the moving part moves in a revolution cone whose apex is the center of gravity of this moving part (11).

2. Measuring device according to claim 1, **characterized in that** said moving rod (15) is mounted on a Cardan joint (19) connected with said case (12).

3. Measuring device according to claim 1, **characterized in that** the moving part (11) pivots around a rotation point and **in that** said at least one repulsion magnet (26) comprises a plurality of magnets arranged in the case (12), on a circle which is concentric with the rotation point of the moving part (11).

4. Measuring device according to claim 1, **characterized in that** the moving part (11) pivots around a rotation point, said at least one repulsion magnet (26) is composed of an annular magnet arranged in the case (12), on a circle which is concentric with the rotation point of the moving part.

5. Measuring device according to claim 1, **characterized in that** the case comprises a dome (25) made of electricity conductive material.

6. Measuring device according to claims 4 and 5, **characterized in that** the dome (25) is shaped as a spherical cap, the sphere from which said spherical cap originates being centered on the point of rotation of the moving part (11).

7. Measuring device according to claim 1, **characterized in that** the means for determining a deviation of the position of the moving part compared to a rest position of this moving part comprise a detector (13) arranged to determine the position of the stabilization magnet (23).

8. Measuring device according to claim 7, **characterized in that** it includes an electronic processing circuit (27) arranged to convert the position of the stabilization magnet (23) determined by the detector (13) into a speed of the fluid.

9. Measuring device according to claim 8, **characterized in that** the electronic processing circuit (27) is further arranged to convert the position of the stabilization magnet (23) determined by the detector (13) into a direction of the movement of the fluid.

10. Measuring device according to claim 1, **characterized in that** it comprises communication means arranged to transmit measurements from said detector (13) to a processing center.
